(19) Europäisches Patentamt
European Patent Office
Office européen des brevets

(11) **EP 4 668 184 A1**

(12) **EUROPEAN PATENT APPLICATION**
published in accordance with Art. 153(4) EPC

(43) Date of publication:
**24.12.2025 Bulletin 2025/52**

(21) Application number: **23922815.8**

(22) Date of filing: **18.07.2023**

(51) International Patent Classification (IPC):
**G06Q 10/20** (2023.01)     **G06Q 10/06** (2023.01)

(52) Cooperative Patent Classification (CPC):
**G06Q 10/06; G06Q 10/20**

(86) International application number:
**PCT/JP2023/026217**

(87) International publication number:
**WO 2024/171481 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.02.2023 JP 2023023601**

(71) Applicant: **Hitachi, Ltd.
Tokyo 100-8280 (JP)**

(72) Inventors:
• **NAGAYOSHI, Tsutomu
  Tokyo 100-8280 (JP)**
• **YANO, Kojin
  Tokyo 100-8280 (JP)**
• **MORI, Sho
  Tokyo 100-8280 (JP)**
• **HIRANO, Kiichi
  Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **COMPUTER SYSTEM, MAINTENANCE DETERMINATION ASSISTANCE METHOD, AND SYSTEM**

(57)     A computer system is coupled to a facility formed of at least one piece of equipment, and holds threshold value information for managing threshold values for classifying, based on a failure probability of the at least one piece of equipment, into any one of a first state indicating a state in which maintenance is required, a second state indicating a state in which whether the maintenance is to be executed is required to be determined, or a third state indicating a state in which the maintenance is not required. The threshold value information includes, for each piece of equipment, a maintenance threshold value that specifies a boundary between the first state and the second state and an abnormality threshold value that specifies a boundary between the second state and the third state. The computer system is configured to execute: processing of determining the maintenance threshold value for each piece of equipment; and processing of calculating the failure probability of the at least one piece of equipment, classifying the at least one piece of equipment into any one of the first state, the second state, or the third state based on the failure probability of and the threshold value information on the at least one piece of equipment, and outputting determination assistance information including a result of the classification.

*FIG. 1*

**Description**

Incorporation by Reference

This application claims priority to Japanese Patent Application No. 2023-23601 filed on February 17, 2023, the content of which is incorporated herein by reference.

Technical Field

This invention relates to an assistance technology for determining whether or not maintenance of equipment forming a facility is required.

Background Art

Facilities of the electric power industry, the railroad industry, and the like have been maintained to a higher level year by year. In particular, owing to development of a sensor technology/an IoT technology in recent years, highly accurate monitoring of states of the equipment forming the facility has been achieved. As a result, as the maintenance of the facility, in order to reduce a maintenance cost, a transition from time-based maintenance (TBM) of periodically maintaining the facility to condition-based maintenance (CBM) of maintaining the facility in accordance with a state of the facility has begun.

As a technology of assisting maintenance determination based on the idea of the CBM, there has been proposed, for example, a technology of considering a tradeoff between a risk of the failure and the maintenance cost of equipment forming a maintenance target facility, to thereby develop a maintenance plan optimal in terms of both of the cost and the risk (for example, see Patent Literature 1). In the technology as described in Patent Literature 1, at an inspection timing, whether the state of each piece of equipment belongs to a preventive maintenance target region or a preventive maintenance non-required region is indicated.

Moreover, in Patent Literature 2, there is disclosed a technology of selecting preventive maintenance candidate equipment, calculating an evaluation value for each piece of the selected equipment, to thereby assigning priority of the maintenance.

Citation List

Patent Literature

    [PTL 1] JP 2005-182465 A
    [PTL 2] JP 2020-4403 A

Summary of Invention

Technical Problem

In a case where the number of pieces of equipment the maintenance of which is to be executed is extremely large, a maintenance cost is very high in the technology as described in Patent Literature 1, and the equipment the maintenance of which is to be executed is limitative, and hence a problem possibly occurs to safe operation in the technology as described in Patent Literature 2.

An object of this invention is to provide a system and a method for presenting information for assisting determination on whether or not maintenance of equipment is to be executed in consideration of a risk of an operation and a maintenance cost.

Solution to Problem

A description is now given of a representative example of this invention disclosed in this application. Specifically, a computer system comprises at least one computer. The at least one computer system being coupled to a facility formed of at least one piece of equipment. The computer system holds threshold value information for managing threshold values for classifying, based on a failure probability of the at least one piece of equipment, into any one of a first state indicating a state in which maintenance is required, a second state indicating a state in which whether the maintenance is to be executed is required to be determined, or a third state indicating a state in which the maintenance is not required. The threshold value information includes, for each piece of equipment, a maintenance threshold value that specifies a boundary between the first state and the second state and an abnormality threshold value that specifies a boundary between the second state and the third state. The computer system is configured to execute: first processing of determining the maintenance threshold value for each piece of equipment; and second processing of calculating the failure probability of the at least one piece of equipment, classifying the at least one piece of equipment into any one of the first state, the second state, or the third state based on the failure probability of and the threshold value information on the at least one piece of equipment, and outputting determination assistance information including a result of the classification.

Advantageous Effects of Invention

According to this invention, it is possible to present the information for assisting the determination on whether or not maintenance of the equipment is to be executed in consideration of the risk of the operation and the maintenance cost. Other problems, configurations, and effects than those described above will become apparent in the descriptions of embodiments below.

Brief Description of Drawings

FIG. 1 is a diagram for illustrating an example of a configuration of a system according to a first embodiment of this invention.
FIG. 2 is a diagram for illustrating an example of a hardware configuration of a computer which forms a maintenance determination assistance system according to the first embodiment.
FIG. 3 is a table for showing an example of a data structure of equipment parameter DB in the first embodiment.
FIG. 4 is a table for showing an example of a data structure of facility schedule DB in the first embodiment.
FIG. 5A and FIG. 5B are tables for showing examples of the data structure of equipment state DB in the first embodiment.
FIG. 6 is a flowchart for illustrating an example of threshold value calculation processing executed by the maintenance determination assistance system according to the first embodiment.
FIG. 7 is a flowchart for illustrating an example of facility model generation processing executed by a facility model generation module in the first embodiment.
FIG. 8 is a graph for showing an example of data processing in the facility model generation processing in the first embodiment.
FIG. 9 is a flowchart for illustrating an example of maintenance determination model generation processing executed by the maintenance determination model generation module 111 in the first embodiment.
FIG. 10 is a graph for showing an example of data processing in the maintenance determination model generation processing in the first embodiment.
FIG. 11A and FIG. 11B are flowcharts for illustrating an example of maintenance simulation executed by a simulation module in the first embodiment.
FIG. 12 is a table for showing an example of a data structure of simulation result DB in the first embodiment.
FIG. 13 is a diagram for illustrating a specific example of internal processing executed by the simulation module in the first embodiment.
FIG. 14 is a flowchart for illustrating an example of analysis processing executed by an analysis module in the first embodiment.
FIG. 15A and FIG. 15B are graphs for showing examples of a change in maintenance threshold value for equipment in the first embodiment.
FIG. 16A, FIG. 16B, and FIG. 16C are graphs for showing examples of data processing in the analysis processing in the first embodiment.
FIG. 17A and FIG. 17B are tables for showing examples of the data structure of analysis result DB in the first embodiment.
FIG. 18 is a flowchart for illustrating an example of presentation processing for determination assistance information executed by the analysis module in the first embodiment.
FIG. 19 is a view for illustrating an example of a screen displayed on a terminal in the first embodiment.
FIG. 20 is a sequence diagram for illustrating a usage method for the maintenance determination assistance system according to the first embodiment.

Description of Embodiments

Now, description is given of at least one embodiment of this invention referring to the drawings. It should be noted that this invention is not to be construed by limiting the invention to the content described in the following at least one embodiment. A person skilled in the art would easily recognize that specific configurations described in the following at least one embodiment may be changed within the scope of the concept and the gist of this invention.

In configurations of the at least one embodiment of this invention described below, the same or similar components or functions are denoted by the same reference numerals, and a redundant description thereof is omitted here.

Notations of, for example, "first", "second", and "third" herein are assigned to distinguish between components, and do not necessarily limit the number or order of those components.

In this specification, maintenance of equipment is a concept including replacement and repair of the equipment or a component forming the equipment. Maintenance to be executed before an occurrence of a failure is described as preventive maintenance, and maintenance to be executed after the occurrence of the failure is described as reactive maintenance. When the preventive maintenance and the reactive maintenance are not distinguished from each other, the term "maintenance" is used.

[First Embodiment]

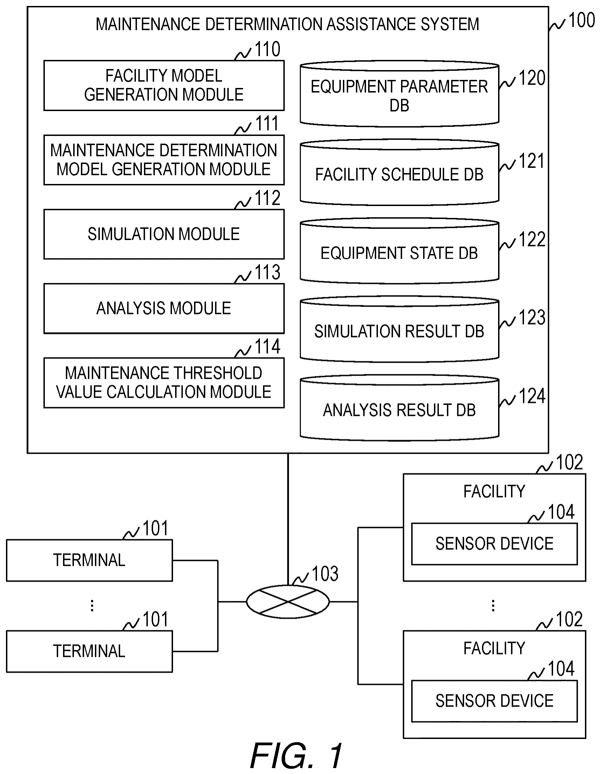

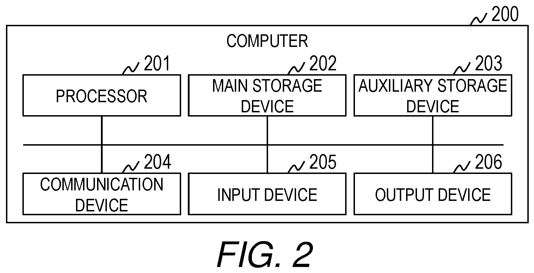

FIG. 1 is a diagram for illustrating an example of a configuration of a system according to a first embodiment of this invention. FIG. 2 is a diagram for illustrating an example of a hardware configuration of a computer which forms a maintenance determination assistance system according to the first embodiment.

The system is formed of a maintenance determination assistance system 100, a plurality of terminals 101, and a plurality of facilities 102. The maintenance determination assistance system 100, the plurality of terminals 101, and the plurality of facilities 102 are coupled to one another via a network 103.

The terminal 101 is a terminal used by a user such as a worker on a site. The terminal 101 includes a processor, a memory, an input device, an output device, and a communication device (not shown).

The facility 102 is formed of a plurality of pieces of equipment (not shown). The facility 102 includes a sensor device 104 for monitoring states of the equipment and the like. This invention is not limited by a type and a scale of the facility 102, types and the number of pieces of equipment forming the facility, and the like.

The maintenance determination assistance system 100 assists determination on whether execution of maintenance of the equipment is required. The maintenance determination assistance system 100 is formed of, for example, a computer 200 as illustrated in FIG. 2. The computer 200 includes a processor 201, a main storage device 202, an auxiliary storage device 203, a communication device 204, an input device 205, and an output device 206. Each hardware element is coupled via an internal bus or the like. The computer 200 may not include the input device 205 and the output device 206.

The input device 205 is a keyboard, a mouse, a touch panel, or the like, and receives input of information, a command, and the like. The output device 206 is, for example, a display, and outputs various types of information.

The communication device 204 communicates to and from an external device. The communication device 204 receives the information received from the terminal 101 and the facility 102, and stores the received information in the auxiliary storage device 203.

The processor 201 executes a program stored in the main storage device 202. The processor 201 executes processing in accordance with the program, to thereby operate as a function module (module) for implementing a specific function. In the following description, when the processing is described with a function module as the subject, the description indicates that the processor 201 is executing the program for implementing the function module.

The main storage device 202 is a memory or the like, and stores programs to be executed by the processor 201. The main storage device 202 is also used as a work area. The main storage device 202 stores programs implementing a facility model generation module 110, a maintenance determination model generation module 111, a simulation module 112, an analysis module 113, and a maintenance threshold value calculation module 114.

The auxiliary storage device 203 is a hard disk drive (HDD), a solid state drive (SSD), or the like, and permanently stores data. The auxiliary storage device 203 stores an equipment parameter DB 120, a facility schedule DB 121, an equipment state DB 122, a simulation result DB 123, and an analysis result DB 124.

The information stored in the auxiliary storage device 203 may be stored in the main storage device 202. Moreover, the programs stored in the main storage device 202 may be stored in the auxiliary storage device 203.

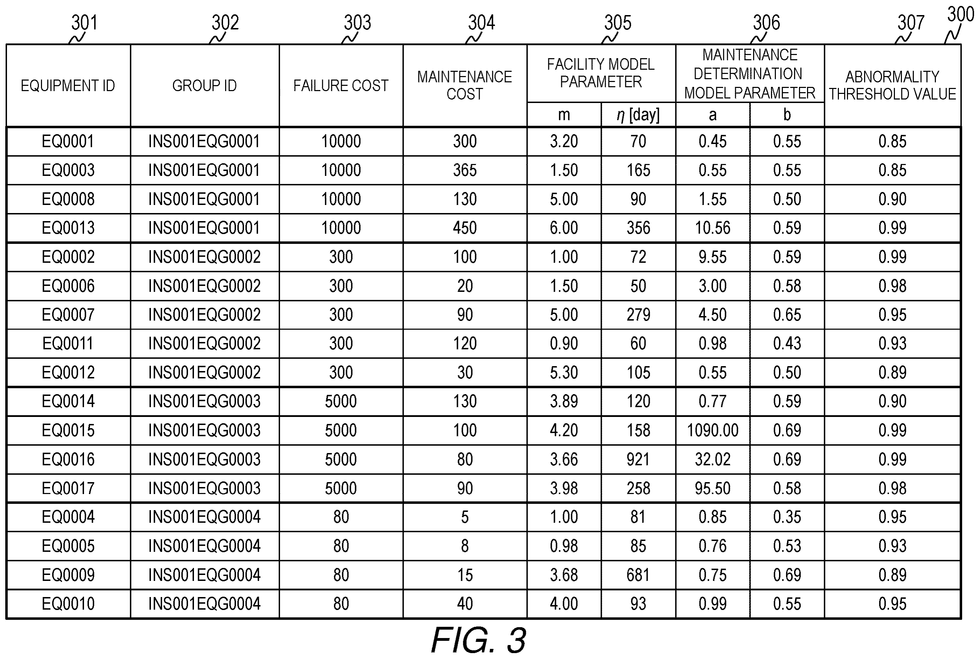

FIG. 3 is a table for showing an example of a data structure of the equipment parameter DB 120 in the first embodiment.

The equipment parameter DB 120 stores a table 300 for each facility 102. The table 300 stores entries each including an equipment ID 301, a group ID 302, a failure cost 303, a maintenance cost 304, a facility model parameter 305, a maintenance determination model parameter 306, and an abnormality threshold value 307. One entry exists for one piece of equipment.

The equipment ID 301 is a field for storing an ID for uniquely identifying the equipment forming the facility. The group ID 302 is a field for storing an ID for uniquely identifying a group of pieces of equipment. In this embodiment, the pieces of equipment are managed in a unit of a group, and the facility is treated as a facility formed of the groups. In the group ID 302 of FIG. 2, an ID which can identify the facility 102 and the group is stored. Specifically, "INS001" indicates a facility 102, and "EQG001" indicates a group.

The failure cost 303 is a field for storing a cost incurred by a failure occurring during the operation. This cost is set in a unit of the group, and includes a loss cost due to stop of the operation of the facility and a reactive maintenance cost.

The maintenance cost 304 is a field for storing a cost required for maintenance of the equipment. This cost is set in a unit of the equipment.

The facility model parameter 305 is a field group for storing parameters of a model (facility model) for estimating a life of the equipment.

The maintenance determination model parameter 306 is a field group for storing parameters of a model for estimating a probability of the execution of the maintenance.

The abnormality threshold value 307 is a field for storing a threshold value (abnormality threshold value) of a probability of a failure which always requires the execution of the maintenance. The abnormality threshold value is a value determined by a material and a type of the equipment, and is assumed to be set in advance to the equipment. The abnormality threshold value may directly be obtained from the equipment, or may be input by the user.

To the equipment ID 301, the group ID 302, the failure cost 303, the maintenance cost 304, and the abnormality threshold value 307, values set in advance by the user or the like are stored. The stored values are not changed as long as a configuration and the like of the facility are not changed. Meanwhile, pieces of information stored in the facility model parameter 305 and the maintenance determination model parameter 306 are sometimes updated by processing of the facility model generation module 110 and the maintenance determination model generation module 111, respectively.

Description is now given of the facility model and the maintenance determination model.

The facility model is a model for calculating the failure probability with respect to the elapse of the time, and the Weibull distribution estimation is often used in the field of the reliability engineering. This embodiment is also described in the case of failure probability estimation based on the Weibull distribution. In general, when it is assumed that the life of a certain piece of equipment follows the Weibull distribution, the facility model is given by Equation (1). Here, m indicates the Weibull coefficient, and $\eta$ indicates the scale.

$$f(t) = \frac{m}{\eta}\left(\frac{t}{\eta}\right)^{m-1}\exp\left\{-\left(\frac{t}{\eta}\right)^{m}\right\}\dots(1)$$

The facility model of the equipment is characterized by the Weibull coefficient $m$ and the scale $\eta$. Thus, the facility model parameter 305 in the second embodiment includes fields for storing the Weibull coefficient m and the scale $\eta$.

In the first embodiment, the failure probability of the equipment is defined by Equation (2).

$$P_j(t, dt) = \frac{F_j(t + dt) - F_j(t)}{1 - F_j(t)}\dots(2)$$

The failure probability given by Equation (2) indicates a failure probability of equipment having the equipment ID of "$j$" from a time $t$ to a time $t+dt$. $F_j(t)$ indicates such a probability that the equipment having the equipment ID of "$j$" fails until the time $t$, and is defined by Equation (3). Here, $m_j$ and $n_j$ indicate parameters of the facility model of the equipment having the equipment ID of "j."

$$F_j(t) = 1 - \exp\left\{-\left(\frac{t}{\eta_j}\right)^{m_j}\right\}\dots(3)$$

The facility 102 also has a non-operational time zone, and it can be considered that the time t of Equation (1) is corrected to a time during the operation. Moreover, a load applied to each piece of equipment varies in accordance with a way of the operation, and the time t may be multiplied by a coefficient equal to or larger than 1 in a case where the load is high.

The maintenance determination model is a model which calculates an execution probability of the maintenance in accordance with the failure probability of the equipment. The most simplified maintenance determination model is such a model that as the failure probability is lower, the probability of the execution of the preventive maintenance is lower, and as the failure probability is higher, the probability of the execution of the maintenance is higher. This can be defined in a form obtained by modifying such a Sigmoid function as given by Equation (4).

$$M_j(t, dt) = \frac{1}{1 - \exp\{-aP_j(t, dt) + b\}} \dots (4)$$

$P_j(t, dt)$ is the expression defined by Equation (2). In the equation, a is a parameter which determines a shape of the Sigmoid function, and as a value thereof increases, the model steeply rises. Moreover, b is an offset term, and is a parameter for adjusting a position of a failure probability at which the value of Equation (3) is 0.5.

In other words, the maintenance determination model is a model indicating the probability of the execution of the maintenance by a maintenance worker for the failure probability of each piece of equipment. $M_j(t, dt)$ of the equipment for which the execution of the maintenance is not required takes a value which can be approximated to 0. $M_j(t, dt)$ of the equipment for which whether or not a person executes the maintenance is required to be determined takes a continuous value in a range of from 0 to 1. $M_j(t, dt)$ of the equipment for which the execution of the maintenance is required takes a value which can be approximated to 1.

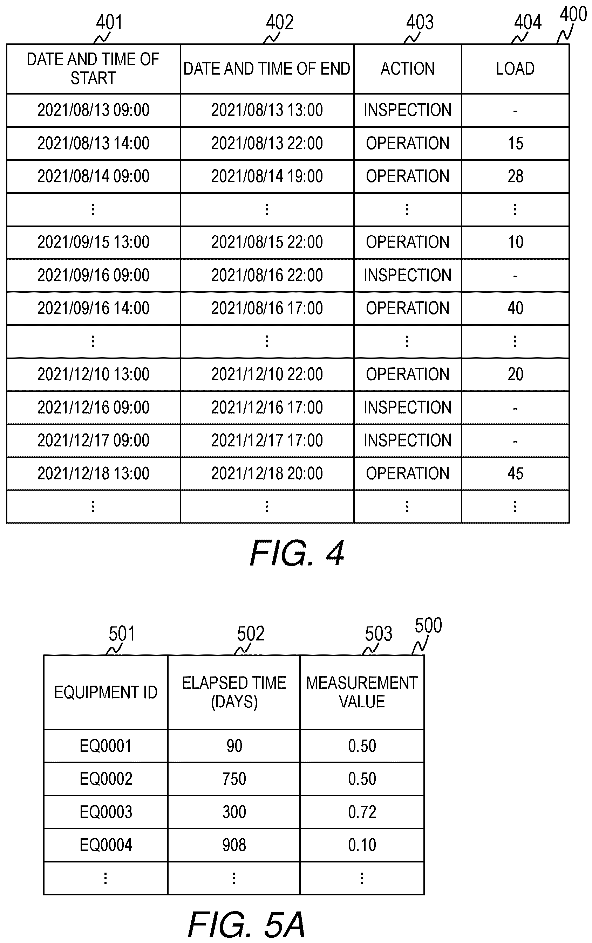

FIG. 4 is a table for showing an example of a data structure of the facility schedule DB 121 in the first embodiment.

The facility schedule DB 121 stores a table 400 for each facility 102. The table 400 is a table for managing a schedule of an inspection and the operation of the facility 102, and stores entries each including a date and time of start 401, an date and time of end 402, an action 403, and a load 404. One entry exists for a schedule of one action.

The date and time of start 401 and the date and time of end 402 are fields for storing a date and a time of a start and a date and a time of an end of the schedule, respectively. The action 403 is a field for storing a type of action. The load 404 is a field for storing a load on the facility. The load 404 of an entry which has "inspection" in the action 403 is blank. A value of the load 404 can be used as the value multiplying the time t in Equation (1).

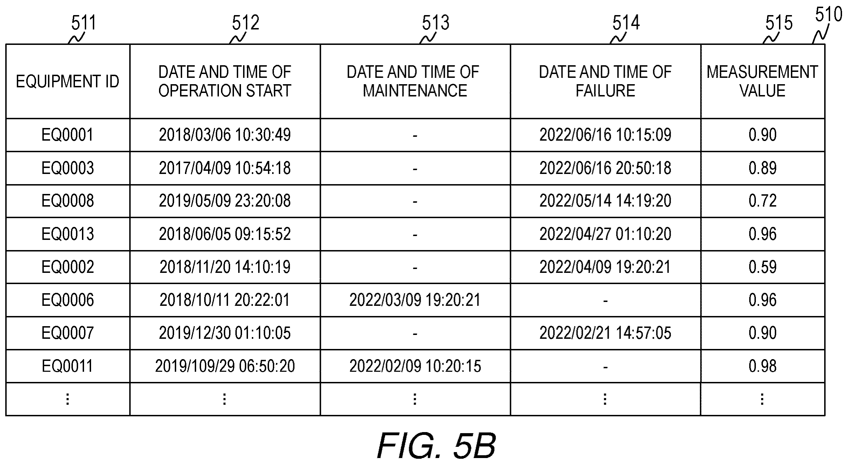

FIG. 5A and FIG. 5B are tables for showing examples of the data structure of the equipment state DB 122 in the first embodiment.

The equipment state DB 122 stores a table 500 and a table 510.

The table 500 is a table for managing measurement information received from the sensor device 104, and stores entries each including an equipment ID 501, an elapsed time 502, and a measurement value 503. One entry exists for one piece of equipment.

The equipment ID 501 is the same field as the equipment ID 301. The elapsed time 502 is a field for storing a time which has elapsed since the equipment was installed in the facility. The measurement value 503 is a field for storing a measurement value or a value calculated from the measurement value.

In this embodiment, the sensor device 104 uses the measurement value indicating the shape, the state, and the like of the equipment to calculate an abnormality value having a range of from 0 to 1, and transmits measurement information including the elapsed time and the abnormality value. In the measurement value 503, the abnormality value is stored.

The table 510 is a table for managing equipment information received from the terminal 101, and stores entries each including an equipment ID 511, a date and time of operation start 512, a date and time of maintenance 513, a date and time of failure 514, and a measurement value 515. One entry exists for one piece of equipment for which the maintenance has been executed by the worker.

The equipment ID 511 is the same field as the equipment ID 301. In the table 510, the information on the equipment for which the maintenance or the replacement has been executed is stored, and hence a plurality of entries for the equipment having the same ID are sometimes stored. The date and time of operation start 512 is a field for storing a date and a time of an operation start of the equipment. The date and time of maintenance 513 is a field for storing a date and a time at which the preventive maintenance was executed. A value is stored in the date and time of maintenance 513 of only an entry corresponding to equipment for which the preventive maintenance has been executed. The date and time of failure 514 is a field for storing a date and a time of a failure of equipment for which the reactive maintenance has been executed. A value is stored in the date and time of failure 514 of only an entry corresponding to equipment for which the reactive maintenance has been executed. The measurement value 515 is a field for storing the measurement result of the sensor device 104 at the time of the execution of the maintenance. In the measurement value 515, the abnormality value is stored.

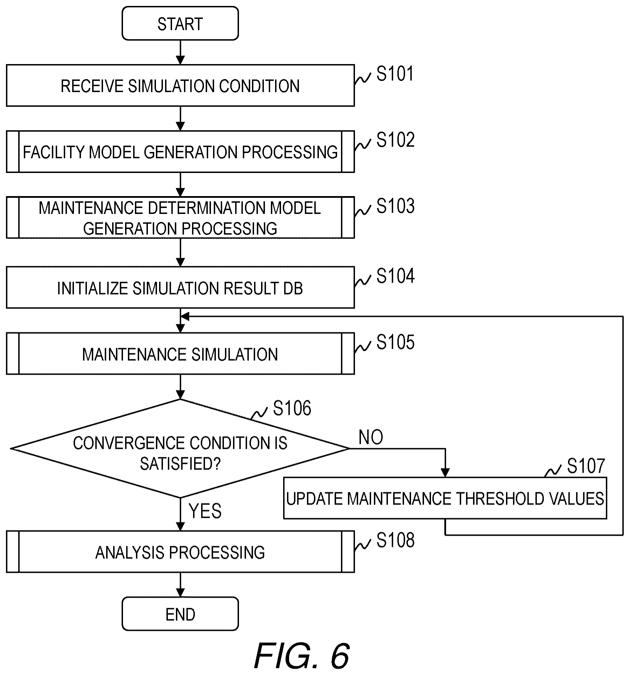

FIG. 6 is a flowchart for illustrating an example of the threshold value calculation processing executed by the maintenance determination assistance system 100 according to the first embodiment.

In a case where the maintenance determination assistance system 100 receives a processing request including a simulation condition, the maintenance determination assistance system 100 starts processing described below.

The maintenance threshold value calculation module 114 obtains the simulation condition included in the processing request (Step S101). The simulation condition includes, for example, a simulation period, a target facility, and a hyperparameter for the Monte Carlo tree search. Information for specifying the equipment to be simulated may be included.

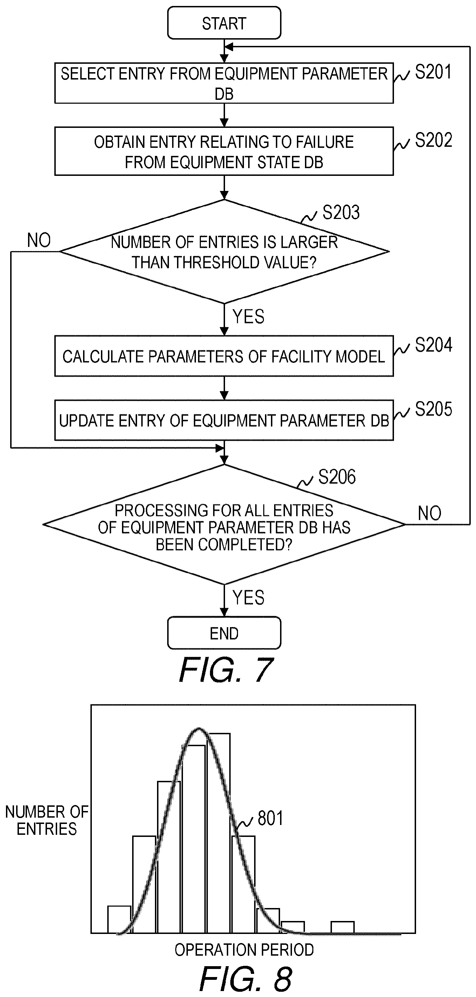

The maintenance threshold value calculation module 114 invokes the facility model generation module 110. The facility model generation module 110 executes facility model generation processing (Step S102). Details of the facility model generation processing are described with reference to FIG. 7.

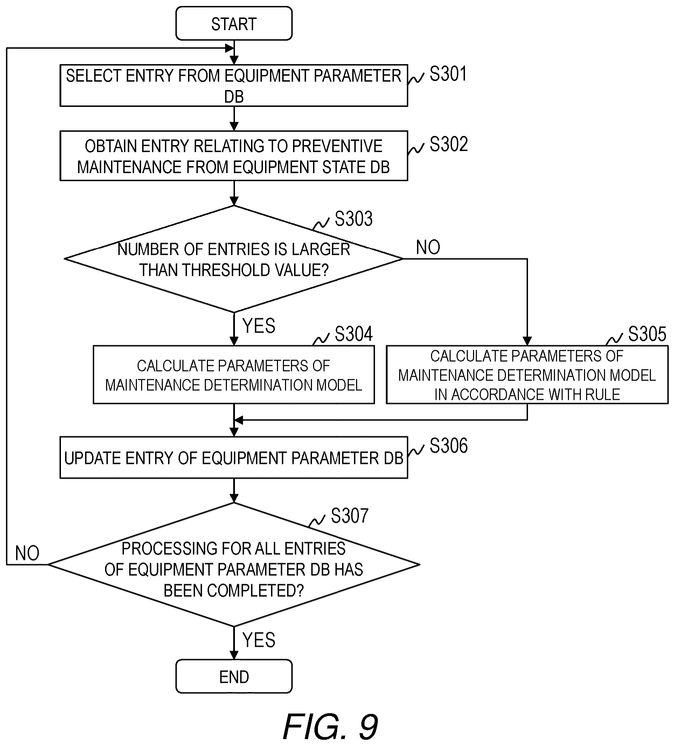

The maintenance threshold value calculation module 114 invokes the maintenance determination model generation module 111 after the facility model generation processing is completed. The maintenance determination model generation module 111 executes maintenance determination model generation processing (Step S103). Details of the maintenance determination model generation processing are described with reference to FIG. 9.

The maintenance threshold value calculation module 114 initializes the simulation result DB 123 (Step S104).

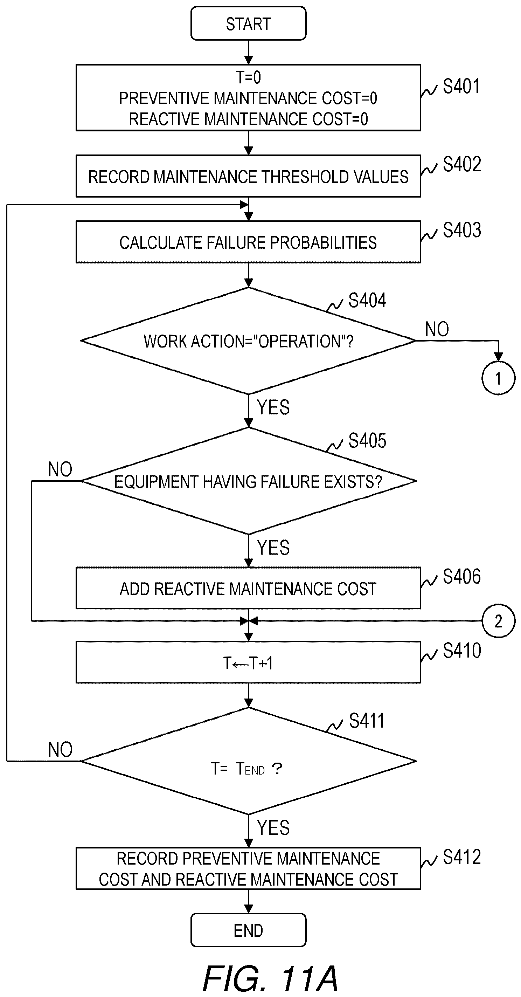

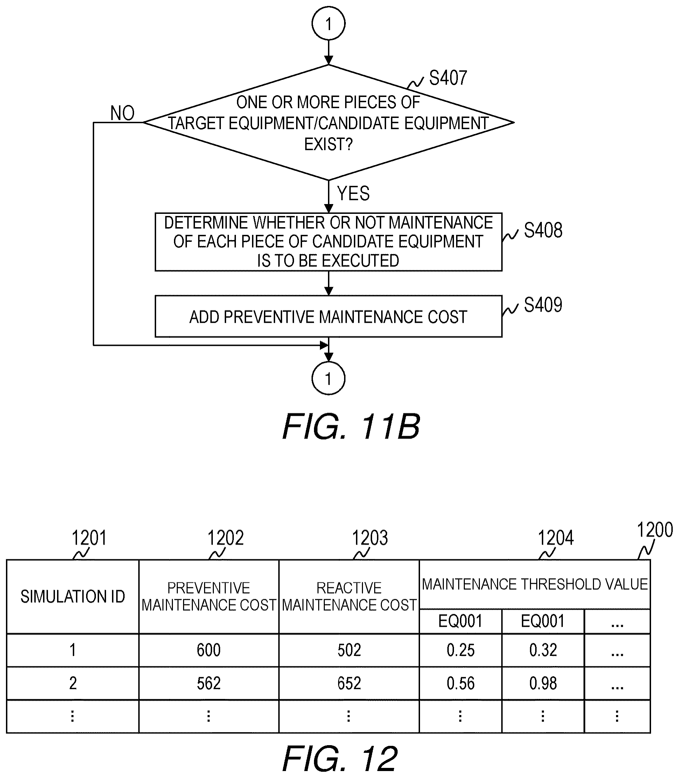

The maintenance threshold value calculation module 114 invokes the simulation module 112. The simulation module 112 executes maintenance simulation for the facility (Step S105). Details of the maintenance simulation are described with reference to FIG. 11A and FIG. 11B.

The maintenance threshold value calculation module 114 determines whether or not a convergence condition is satisfied (Step S106). Here, the convergence condition is such a condition that the number of times of the execution of the maintenance simulation is larger than a threshold value, or such a condition that a change rate of a maintenance threshold value is smaller than a threshold value.

In a case where the convergence condition is not satisfied, the maintenance threshold value calculation module 114 uses the simulation result DB 123 for storing a result of the maintenance simulation to update the maintenance threshold values (Step S107), and then returns to Step S105.

The maintenance threshold value calculation module 114 uses, for example, the Markov-Chain Monte-Carlo method to update the maintenance threshold value. In the MCMC method, the maintenance threshold value is updated such that, for example, a value of Equation (5) is maximized.

$$L(\theta_1, \theta_2, \cdots, \theta_n) = \exp\left(-\frac{\Delta}{\delta}\right) \dots (5)$$

Here, $\theta_i$ ($i$ is 1 to "n") indicates the maintenance threshold value for equipment $i$. $\delta$ indicates the hyperparameter. $\Delta$ is a value for evaluating a result of the maintenance simulation, and is defined as given in, for example, Equation (6).

$$\Delta = \begin{cases} 0, & (Cost_{SIM} \leq Cost_{budget}) \\ Cost_{SIM} - Cost_{budget}, & (else) \end{cases} \dots (6)$$

Here, $Cost_{buget}$ indicates a budget amount. $Cost_{SIM}$ indicates a maintenance cost calculated through the maintenance simulation. Equation (6) is a value obtained when such a condition that the maintenance cost does not exceed the budget amount is set as a constraint condition. The value may be a value obtained additionally in consideration of such a constraint condition that a difference between the maintenance cost and the budget amount is equal to or smaller than a certain value, and such a constraint condition that the maintenance cost in a plurality of periods is within a range of a certain budget amount.

Moreover, such a constraint condition that a cost in a case in which the equipment in each equipment group fails, which is given by Equation (7), is always equal to or smaller than a certain value may be additionally considered.

$$r_i = C_i \left\{ 1 - \prod_j (1 - P_i(t, dt)) \right\} \dots (7)$$

Moreover, such a constraint condition that a cost given by Equation (8) obtained from the failure probability of the equipment in each equipment group given by Equation (7) in a case in which the facility fails is always equal to or smaller than a certain value may be additionally considered.

$$R = \sum_i r_i \dots (8)$$

The above-mentioned update method for the maintenance threshold values is an example, and the update method is not limited to this example. Description has been given of Step S107.

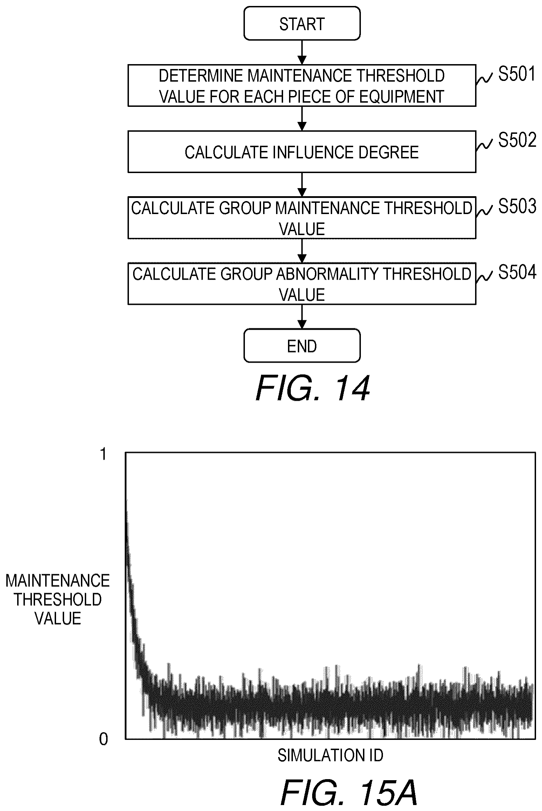

In a case where the convergence condition is satisfied, the maintenance threshold value calculation module 114 invokes the analysis module 113. The analysis module 113 executes analysis processing (Step S108). Details of the analysis processing are described with reference to FIG. 14. The maintenance threshold value calculation module 114 finishes the series of processing after the analysis processing is completed.

The facility model generation processing and the maintenance determination model generation processing may be skipped. Moreover, the facility model generation processing and the maintenance determination model generation processing may be executed at different execution timings.

As described later, the maintenance determination assistance system 100 according to the first embodiment uses the maintenance threshold value and the abnormality threshold value to classify the equipment into any one of a state (first state) in which the maintenance is required, a state (second state) in which it is required to determine whether or not the maintenance is to be executed, or a state (third state) in which the maintenance is not required. Specifically, in a case where the failure probability is smaller than the maintenance threshold value, the equipment is classified into the third state. In a case where the failure probability is equal to or larger than the maintenance threshold value and smaller than the abnormality threshold value, the equipment is classified into the second state. In a case where the failure probability is equal to or larger than the abnormality threshold value, the equipment is classified into the third state. The equipment in the first state is hereinafter referred to as target equipment, the equipment in the second state is referred to as candidate equipment, and the equipment in the third state is referred to as non-target equipment.

FIG. 7 is a flowchart for illustrating an example of the facility model generation processing executed by the facility model generation module 110 in the first embodiment. FIG. 8 is a graph for showing an example of data processing in the facility model generation processing in the first embodiment.

The facility model generation module 110 selects one entry from the equipment parameter DB 120 (Step S201). The equipment corresponding to the selected entry is hereinafter referred to as target equipment.

The facility model generation module 110 obtains entries relating to the failure of the target equipment from the table 510 of the equipment state DB 122 (Step S202). Specifically, the facility model generation module 110 obtains entries in each of which the ID of the target equipment is stored in the equipment ID 511 and a date and a time are stored in the date and time of failure 514.

The facility model generation module 110 determines whether or not the number of obtained entries is larger than the threshold value (Step S203). The threshold value is, for example, 20.

In a case where the number of obtained entries is equal to or smaller than the threshold value, the facility model generation module 110 proceeds to Step S206.

In a case where the number of obtained entries is larger than the threshold value, the facility model generation module 110 uses the obtained entries to calculate the parameters of the facility model (Step S204).

Specifically, the facility model generation module 110 subtracts, for each entry, the date and time of operation start 512 of the entry from the date and time of failure 514 thereof to calculate the number of years of the operation. The facility model generation module 110 generates a histogram of the number of years of the operation, and calculates the Weibull coefficient $m$ and the scale $\eta$ such that the Weibull coefficient $m$ and the scale $\eta$ statistically express the histogram.

In a case of a histogram of the number of years of the operation of FIG. 8, a solid line 801 statistically expresses the histogram. Thus, the Weibull coefficient $m$ and the scale $\eta$ are calculated such that the Weibull coefficient $m$ and the scale $\eta$ express the solid line 801.

The facility model generation module 110 updates, based on a calculation result, the facility model parameter 305 of the entry corresponding to the target equipment of the equipment parameter DB 120 (Step S205). After that, the facility model generation module 110 proceeds to Step S206.

In Step S206, the facility model generation module 110 determines whether or not the processing has been completed for all of the entries of the equipment parameter DB 120 (Step S206).

In a case where the processing has not been completed for all of the entries of the equipment parameter DB 120, the facility model generation module 110 returns to Step S201. In a case where the processing has been completed for all of the entries of the equipment parameter DB 120, the facility model generation module 110 finishes the facility model generation processing.

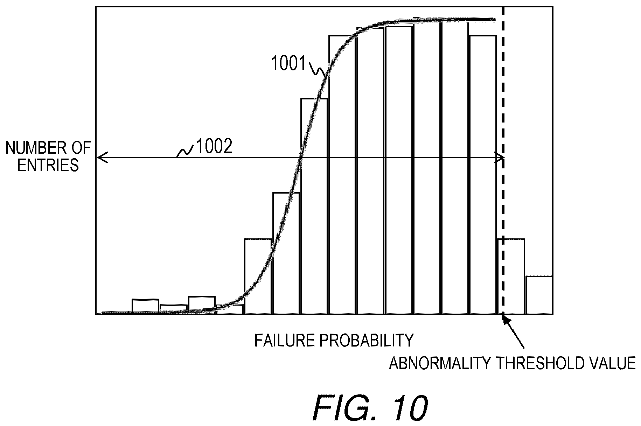

FIG. 9 is a flowchart for illustrating an example of the maintenance determination model generation processing executed by the maintenance determination model generation module 111 in the first embodiment. FIG. 10 is a graph for showing an example of data processing in the maintenance determination model generation processing in the first embodiment.

The maintenance determination model generation module 111 selects one entry from the equipment parameter DB 120 (Step S301). The equipment corresponding to the selected entry is hereinafter referred to as target equipment.

The maintenance determination model generation module 111 obtains entries relating to the preventive maintenance of the target equipment from the table 510 of the equipment state DB 122 (Step S302). Specifically, the facility model generation module 110 obtains entries in each of which the ID of the target equipment is stored in the equipment ID 511 and a date and a time are stored in the date and time of maintenance 513.

The maintenance determination model generation module 111 determines whether or not the number of obtained entries is larger than the threshold value (Step S303). The threshold value is, for example, 20.

In a case where the number of obtained entries is larger than the threshold value, the maintenance determination model generation module 111 uses the obtained entries to calculate the parameters of the maintenance determination model (Step S304). After that, the maintenance determination model generation module 111 proceeds to Step S306.

Specifically, the maintenance determination model generation module 111 uses the facility model of the target equipment to calculate, for the obtained entries, the failure probability of the target equipment at the time of the maintenance. The maintenance determination model generation module 111 generates a histogram of the failure probability of the target equipment, and calculates parameters a and b such that the parameters a and *b* express the histogram.

In a case of a histogram of the failure probability of the target equipment" of FIG. 10, a solid line 1001 statistically expresses the histogram. Thus, the parameters a and b are calculated such that the parameters a and *b* express the solid line 1001. A range used for the processing may be set such that the abnormality threshold value is an upper limit. In FIG. 10, a histogram in a range 1002 is used.

In a case where the number of obtained entries is equal to or smaller than the threshold value, the maintenance determination model generation module 111 calculates the parameters of the maintenance determination model in accordance with a rule (Step S305). After that, the maintenance determination model generation module 111 proceeds to Step S306.

The rule in Step S305 is, for example, such a rule that the maintenance determination model generation module 111 sets an extremely large numerical value such as 1e99 to the parameter *a,* and sets, to the parameter *b,* a value obtained by multiplying the abnormality threshold value by 0.5. By setting the parameters as described above, there is obtained such a step function that the probability changes from 0 to 1 in a vicinity of a failure probability being a half of the abnormality threshold value.

In Step S306, the maintenance determination model generation module 111 updates, based on a calculation result, the maintenance determination model parameter 306 of the entry corresponding to the target equipment of the equipment parameter DB 120 (Step S306).

The maintenance determination model generation module 111 determines whether or not the processing has been completed for all of the entries of the equipment parameter DB 120 (Step S307).

In a case where the processing has not been completed for all of the entries of the equipment parameter DB 120, the maintenance determination model generation module 111 returns to Step S301. In a case where the processing has been completed for all of the entries of the equipment parameter DB 120, the maintenance determination model generation module 111 finishes the maintenance determination model generation processing.

The failure probability of the equipment is calculated through use of the number of years of the operation, but may be calculated through use of the measurement value 515 of the table 510 of the equipment state DB 122.

The failure probability of the equipment calculated through use of Equation (1), Equation (2), and Equation (3) is a theoretical value, and may be corrected through use of the measurement value of the sensor device 104. For example, when it is assumed that the value of the measurement value 515 exists in a vicinity of the abnormality threshold value, the failure probability of the equipment can be estimated from the value of the measurement value 515. The calculated failure probability of the equipment may be corrected through use of this estimation.

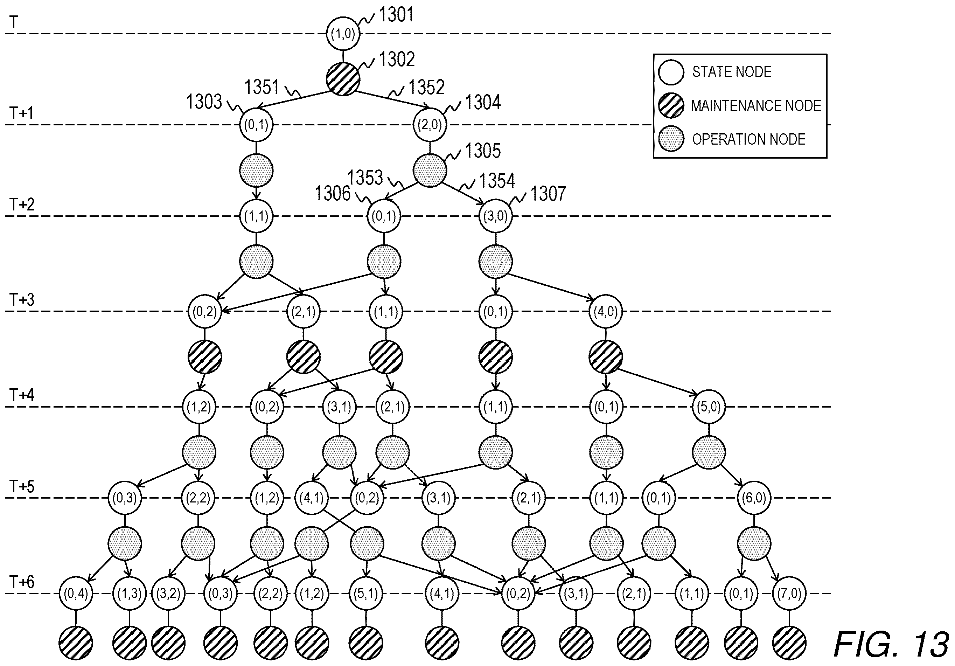

FIG. 11A and FIG. 11B are flowcharts for illustrating an example of maintenance simulation executed by the simulation module 112 in the first embodiment. FIG. 12 is a table for showing an example of a data structure of the simulation result DB 123 in the first embodiment. FIG. 13 is a diagram for illustrating a specific example of internal processing executed by the simulation module 112 in the first embodiment.

In the maintenance simulation, the date and the time of the execution of the action of the inspection and the operation are set as a time step, and the requirement of the maintenance and the state of the equipment in the time step are simulated.

In a case where a simulation period is set to a period from "2021/12/10" to "2021/12/18," based on the table 400 of FIG. 4, a time step $T$=0 is "2021/12/10 13:00," and a time step $T$=1 is "2021/12/16 09:00."

The simulation module 112 refers to the facility schedule DB 121 to set the time steps in the simulation period, and initializes the variable $T$ indicating the time step to 0 (Step S401). At this time, the simulation module 112 also initializes a preventive maintenance cost and a reactive maintenance cost to 0.

The simulation module 112 records the maintenance threshold value in the simulation result DB 123 (Step S402).

As shown in FIG. 12, in the simulation result DB 123, a table 1200 is stored. The table 1200 stores entries each including a simulation ID 1201, a preventive maintenance cost 1202, a reactive maintenance cost 1203, and a maintenance threshold value 1204. One entry exists for one time of the maintenance simulation.

The simulation ID 1201 is a field for storing an ID of the maintenance simulation. The preventive maintenance cost 1202 and the reactive maintenance cost 1203 are fields for storing the preventive maintenance cost and the reactive maintenance cost calculated by the maintenance simulation, respectively. The maintenance threshold value 1204 is a field group for storing the maintenance threshold values of the pieces of equipment.

In Step S402, the simulation module 112 adds an entry to the table 1200, and sets the ID to the simulation ID 1201 of the added entry. Moreover, the simulation module 112 sets the maintenance threshold value for each piece of equipment in the maintenance threshold value 1204. In a case where the information on the maintenance threshold value is to be stored in the analysis result DB 124, the simulation module 112 may set the maintenance threshold value based on this information. Moreover, the maintenance threshold value may randomly be set.

The simulation module 112 calculates a failure probability of each piece of equipment in the time step $T$ (Step S403). Specifically, the simulation module 112 calculates the number of years of the operation from the date and time corresponding to the time step $T$ and a date and a time of the installation of the equipment, and assigns the number of years of the operation to the variable $t$ of Equation (2) to calculate the failure probability of the equipment.

The simulation module 112 determines whether or not the action in the time step $T$ is "operation" (Step S404). Specifically, the simulation module 112 makes the determination based on the action 403 of the entry corresponding to the time step $T$ of the table 400.

In a case where the action of the time step $T$ is "operation," the simulation module 112 determines whether or not the equipment to which the failure has occurred exists (Step S405).

Specifically, the simulation module 112 generates, for each piece of equipment, a random number in a range of from 0 to 1, and determines whether or not the random number is larger than the failure probability of the equipment. In a case where the random number is larger than the failure probability of the equipment, the simulation module 112 determines that the equipment has failure.

In a case where the equipment to which the failure has occurred does not exist, the simulation module 112 proceeds to Step S410.

In a case where the equipment to which the failure has occurred exits, the simulation module 112 updates the date and time of installation of this equipment to the date and the time corresponding to the time step $T$, and updates the reactive maintenance cost (Step S406). After that, the simulation module 112 proceeds to Step S410.

Specifically, the simulation module 112 adds, to the reactive maintenance cost, a sum of the value of the maintenance cost 304 of the equipment to which the failure has occurred and the value of the failure cost 303 of the equipment group to which this equipment belongs.

In a case where the action in the time step $T$ is "inspection" in Step S404, the simulation module 112 determines whether or not one or more pieces of any one of the target equipment or the candidate equipment exist (Step S407).

Specifically, the simulation module 112 classifies, based on the failure probability of each piece of equipment, the equipment, and determines whether or not one or more pieces of any one of equipment in the first state and equipment in the second state exist.

In a case where only pieces of non-target equipment exist, the simulation module 112 proceeds to Step S410.

In a case where one or more pieces of any one of target equipment or candidate equipment exist, the simulation module 112 determines, for each of the pieces of candidate equipment, whether or not the maintenance of the equipment is to be executed (Step S408).

In a case where the maintenance of the equipment is executed in a certain time step, the number of years of the operation of this equipment is initialized, and hence the execution of the maintenance also influences the determination on whether or not the maintenance is to be executed in the next time step. In a case where it is intended to cause the total maintenance cost after M steps to approach the budget amount, for the determination on whether or not the maintenance of the pieces of equipment is to be executed in the current time step, it is required to consider a combination of the pieces of equipment the maintenance of which is to be executed in each time step. In a case where the number of pieces of equipment is N, the number of above-mentioned combinations is $2^{N \times M}$, and hence the amount of calculation is large. Thus, in this embodiment, the Monte Carlo tree search is used to efficiently search the combinations. In a case where the calculation using the Monte Carlo tree is executed for an infinite number times, the same result as that in the case in which the calculation is executed for the combinations of the execution/non-execution of the maintenance of all pieces of equipment in all time steps can be obtained.

In FIG. 13, an overview of the Monte Carlo tree search in the first embodiment is illustrated. As nodes, an operation node, a maintenance node, and a state node exist. The operation node indicates the operation of the equipment. The maintenance node indicates the inspection of the equipment. The state indicates the state of the equipment at the time of the operation or at the time of the inspection.

A numerical value of the state node of FIG. 13 indicates a failure probability index and a total maintenance cost index. For simplicity of a description, in place of the failure probability, the failure probability index being an integer equal to or larger than 0 and equal to or smaller than 10 is used. Moreover, the total maintenance cost index being an integer equal to or larger than 0 is used.

Description is now given while it is assumed that a state node 1301 in the time step $T$ is (1, 0).

The simulation module 112 inputs the failure probability of the equipment in a time step $T+1$ to the maintenance determination model, to thereby calculate, for a maintenance node 1302, the maintenance probability. The simulation module 112 selects any one action of the execution or the non-execution of the maintenance based on the maintenance probability. In a case where an action 1352 of the non-execution of the maintenance is selected, there occurs a transition to the state node 1304 in which 1 is added to the failure probability index of the state node 1301. In a case where an action 1351 of the execution of the maintenance is selected, there occurs a transition to a state node 1303 in which the failure probability index is initialized to 0, and 1 is added to the total maintenance cost index of the state node 1301. The maintenance cost is actually added to the total maintenance cost.

In the time step ($T$+1), the operation is executed in the states of the state node 1303 and the state node 1304.

The simulation module 112 determines, for an operation node 1305, any one action of the normal or the failure based on the failure probability of the equipment in a time step ($T$+2). In a case where a normal action 1354 is selected, there occurs a transition to a state node 1307 in which 1 is added to the failure probability index of the state node 1304. In a case where an action 1353 of the failure is selected, there occurs a transition to a state node 1306 in which the failure probability index is initialized to 0, and 1 is added to the total maintenance cost index of the state node 1304. The reactive maintenance cost is actually added to the total maintenance cost.

As described above, for the maintenance node and the operation node, it is possible to select any one of the action which increases the failure probability index, or the action which initializes the failure probability index and increases the total maintenance cost index.

The simulation module 112 extends the tree down to, for example, a time step (T+3) through the same procedure, and, after that, executes the simulation down to a terminal end for each state node in the time step (T+3). The terminal end is, for example, a time step ($T$+n). The simulation module 112 assigns an evaluation value to each state node in the time step ($T$+3) based on a result of the simulation. For example, an average value of differences each between the total maintenance cost and the budget amount is calculated as the evaluation value.

The simulation module 112 selects a node based on the evaluation value, and executes the extension, the simulation, and the evaluation also for each state node in the time step ($T$+3). The evaluation value of the node closer to the state node 1301 than the extended state node updates the evaluation value of each extended state node. For example, the simulation module 112 adds the evaluation value assigned to the state node 1307 to the state note 1304 to obtain an average value, to thereby update the evaluation value of the state node 1304.

The simulation module 112 repeats the above-mentioned processing, to thereby select an action of transitioning to a node having the highest evaluation value assigned to the state node 1301 as the action of the maintenance node 1302.

Description has been given of the processing in Step S408.

The simulation module 112 adds, to the preventive maintenance cost, a cost required for the maintenance of the target equipment and the candidate equipment for which the maintenance execution is selected (Step S409), and then proceeds to Step S410. At this time, the attachment time of the target equipment and the candidate equipment for which the maintenance execution is selected is set to the time step $T$.

In step S410, the simulation module 112 increments the time step $T$ by one (Step S410).

The simulation module 112 determines whether or not the time step $T$ is a time step $T_{end}$ at the terminal end (Step S411).

In a case where the time step $T$ is not the time step $T_{END}$ at the terminal end, the simulation module 112 returns to Step S403.

In a case where the time step $T$ is the time step $T_{END}$ at the terminal end, the simulation module 112 records the preventive maintenance cost and the reactive maintenance cost in the simulation result DB 123 (Step S412), and then finishes the maintenance simulation.

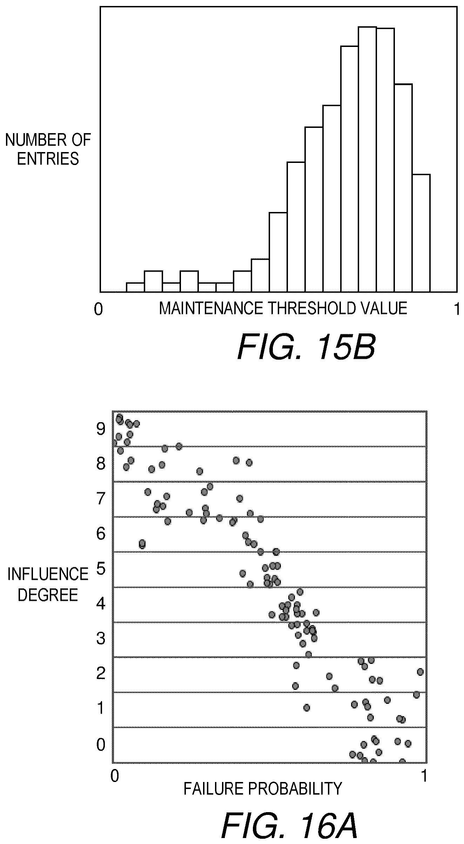

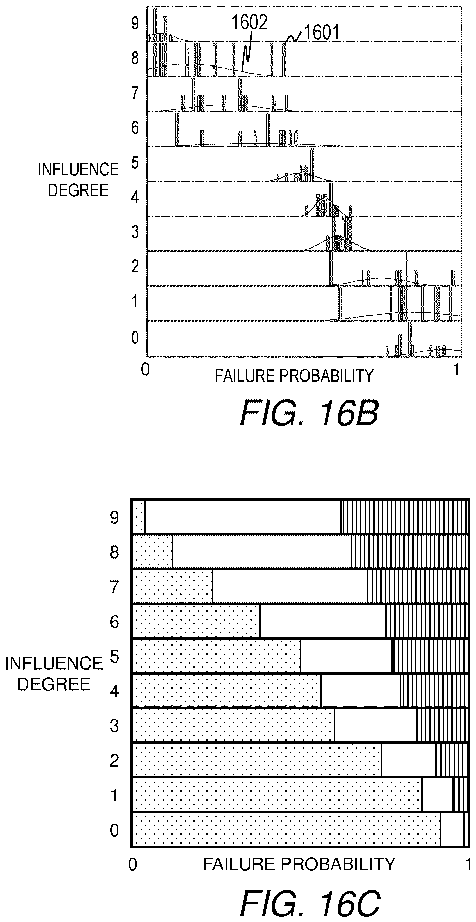

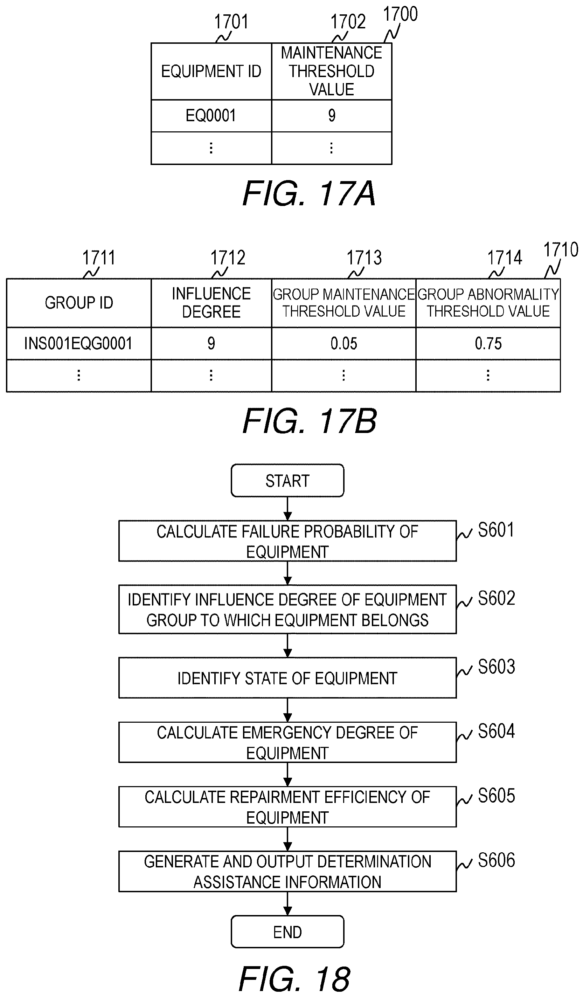

FIG. 14 is a flowchart for illustrating an example of the analysis processing executed by the analysis module 113 in the first embodiment. FIG. 15A and FIG. 15B are graphs for showing examples of a change in maintenance threshold value for the equipment in the first embodiment. FIG. 16A, FIG. 16B, and FIG. 16C are graphs for showing examples of data processing in the analysis processing in the first embodiment. FIG. 17A and FIG. 17B are tables for showing examples of the data structure of the analysis result DB 124 in the first embodiment.

The analysis module 113 refers to the simulation result DB 123, to thereby determine the maintenance threshold value for each piece of equipment (Step S501).

FIG. 15A shows a change in maintenance threshold value for the equipment. FIG. 15B is a histogram for showing a distribution of the maintenance threshold value. As shown in FIG. 15A and FIG. 15B, the maintenance threshold value for each piece of equipment converges to a certain range. The analysis module 113 determines, as the maintenance threshold value for the equipment, a statistical value such as the median, the maximum likelihood value, or the average value of the distribution of FIG. 15B.

The analysis module 113 calculates, for each equipment group, an influence degree indicating a magnitude of influence of the failure of the equipment forming the equipment group (Step S502).

Specifically, the analysis module 113 calculates, based on the values of the failure costs 303 of the equipment group, the influence degree which takes a discrete value. For example, there is conceivable a method of assigning integers in a descending order of the failure costs 303.

A relationship between the influence degree and the maintenance threshold value is indicated as a scatter diagram of FIG. 16A. A vertical axis indicates the influence degree, and a horizontal axis indicates the maintenance threshold value. In FIG. 16A, as the influence degree, integers from 0 to 9 are assigned.

The analysis module 113 calculates a group maintenance threshold value for each equipment group (Step S503).

Specifically, the analysis module 113 generates a histogram indicating a distribution of the maintenance threshold value for the pieces of equipment for each equipment group. The analysis module 113 fits the histogram to a normal distribution, and calculates, as the group maintenance threshold value, an average value thereof.

An image of the calculation is shown in FIG. 16B. A rectangle 1601 of FIG. 16B indicates a bin of the histogram. A curve 1602 of FIG. 16B indicates a result of the fitting the histogram to the normal distribution.

The analysis module 113 calculates a group abnormality threshold value for each equipment group (Step S504). A calculation method for the group abnormality threshold value is the same as the calculation method for the group maintenance threshold value.

FIG. 16C shows a calculation result of the group maintenance threshold value and the group abnormality threshold value. Dotted rectangular regions are regions determined by the group maintenance threshold value. White rectangular regions are regions determined by the group maintenance threshold value and the group abnormality threshold value. Vertical striped rectangular regions are regions determined by the group abnormality threshold value. The dotted rectangular regions indicate ranges of the third state. The white rectangular regions indicate ranges of the second state. The vertical striped rectangular regions indicate ranges of the first state.

The analysis module 113 stores the processing result in the analysis result DB 124 (Step S505), and finishes the analysis processing.

In the analysis result DB 124, a table 1700 and a table 1710 are stored.

The table 1700 stores maintenance threshold values of the pieces of equipment. The table 1700 stores entries each including an equipment ID 1701 and a maintenance threshold value 1702. One entry exists for one piece of equipment.

The equipment ID 1701 is the same field as the equipment ID 301. The maintenance threshold value 1702 is a field for storing the maintenance threshold value for the equipment calculated in Step S501.

The table 1710 stores entries each including a group ID 1711, an influence degree 1712, a group maintenance threshold value 1713, and a group abnormality threshold value 1714. One entry exists for one group.

The group ID 1711 is the same field as the group ID 302. The influence degree 1712 is a field for storing the influence degree of the group. The group maintenance threshold value 1713 and the group abnormality threshold value 1714 are fields for storing the group maintenance threshold value and the group abnormality threshold value, respectively.

The analysis module 113 may execute only the processing in Step S501. In this case, the table 1700 is stored in the analysis result DB 124.

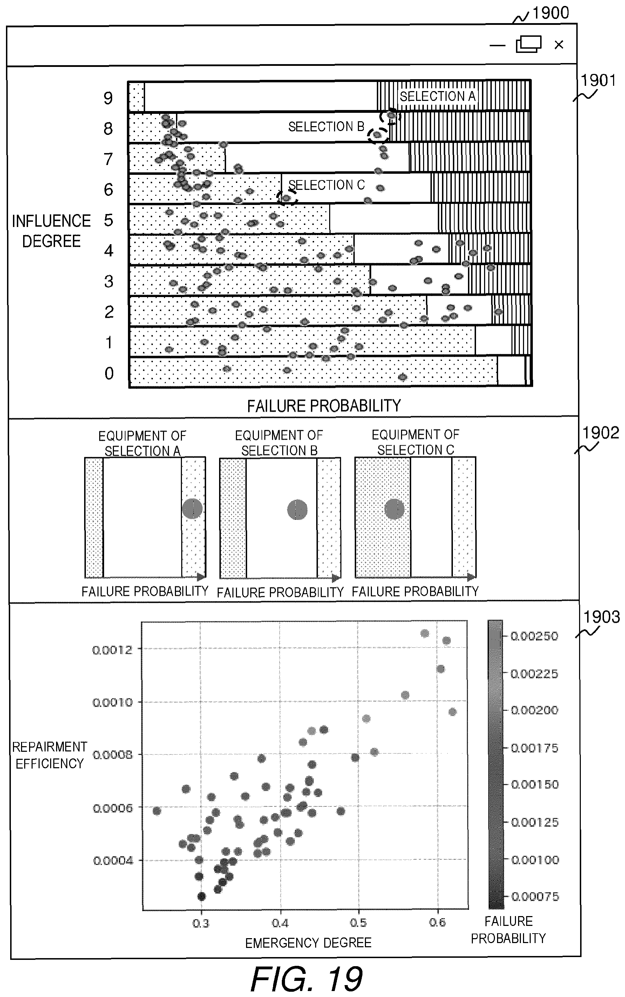

FIG. 18 is a flowchart for illustrating an example of presentation processing for determination assistance information executed by the analysis module 113 in the first embodiment. FIG. 19 is a view for illustrating an example of a screen displayed on the terminal 101 in the first embodiment.

The analysis module 113 executes, in a case where the analysis module 113 receives a presentation request, processing described below. The presentation request includes information for specifying the facility or the equipment.

The analysis module 113 calculates, for each piece of equipment, the current failure probability of the equipment (Step S601).

The analysis module 113 identifies, for each piece of equipment, the influence degree of the group to which the equipment belongs (Step S602). Specifically, the analysis module 113 refers to the equipment parameter DB 120, to thereby identify the group to which the equipment belongs. The analysis module 113 refers to the analysis result DB 124, to thereby identify the influence degree of the group.

The analysis module 113 identifies, for each piece of equipment, the state of the equipment (Step S603). Specifically, the analysis module 113 classifies the state of the equipment based on the failure probability of the equipment and the group maintenance threshold value and the group abnormality threshold value for the equipment group.

The analysis module 113 calculates, for each piece of equipment, an emergency degree of the equipment (Step S604). Specifically, the analysis module 113 calculates, as the emergency degree, a time $t'$ which satisfies Equation (9). Here, $P_{prevention}$ indicates the abnormality threshold value for the equipment. The emergency degree indicates a time from the current time to a time at which the abnormality threshold value is reached.

$$P_j(t + t', dt) = P_{prevention} \cdots (9)$$

The analysis module 113 calculates, for each piece of equipment, a repairment efficiency (Step S605).

Specifically, the analysis module 113 calculates, as the repairment efficiency, a value obtained by dividing the failure probability by the maintenance cost 304.

The analysis module 113 generates determination assistance information for displaying a processing result, and outputs the generated determination assistance information (Step S606). After that, the analysis module 113 finishes the determination assistance information presentation processing.

The analysis module 113 may execute the determination assistance information presentation processing after the execution of the analysis processing. In this case, the processing is executed with a time of the processing execution as a reference. Moreover, the analysis module 113 may present only the classification result through use of the maintenance threshold value for each piece of equipment.

The terminal 101 displays a screen 1900 as illustrated in FIG. 19 based on the determination assistance information. The screen 1900 includes display areas 1901, 1902, and 1903.

The display area 1901 is an area for displaying the classification result of the states of the pieces of equipment. A background of the display area 1901 is displayed based on the table 1700. Moreover, points in the display area 1901 are obtained by plotting the failure probabilities.

The user refers to the display area 1901, to thereby be capable of grasping the distribution of the pieces of equipment in the respective states in an overlooking manner.

The display area 1902 is an area for displaying a relationship between the emergency degree and the repairment efficiency of the equipment. In a scatter diagram displayed in the display area 1902, it can be considered that equipment having a high emergency degree and a high repairment efficiency is maintained with priority.

The user refers to the display area 1902, to thereby be capable of selecting the equipment the maintenance of which is to be executed with priority.

The display area 1903 is an area for displaying states based on the maintenance threshold values and the abnormality threshold values of the pieces of equipment selected in the display area 1901.

The user refers to the display area 1903, to thereby be capable of grasping detailed states of the pieces of equipment.

The maintenance determination assistance system 100 executes simulation for the maintenance in consideration of the budget amount, to thereby determine the maintenance threshold value for the equipment. Moreover, the maintenance determination assistance system 100 can calculate the maintenance threshold value (group maintenance threshold value) in the unit of the equipment group based on the maintenance threshold values of the pieces of equipment. The maintenance determination assistance system 100 uses the group maintenance threshold value and the group abnormality threshold value, to thereby be capable of classifying the states of the pieces of equipment for each equipment group. Moreover, the maintenance determination assistance system 100 presents information enabling the grasp of the distribution of the states of the pieces of equipment in the overlooking manner, to thereby be capable of assisting the determination of the equipment the maintenance of which is to be executed.

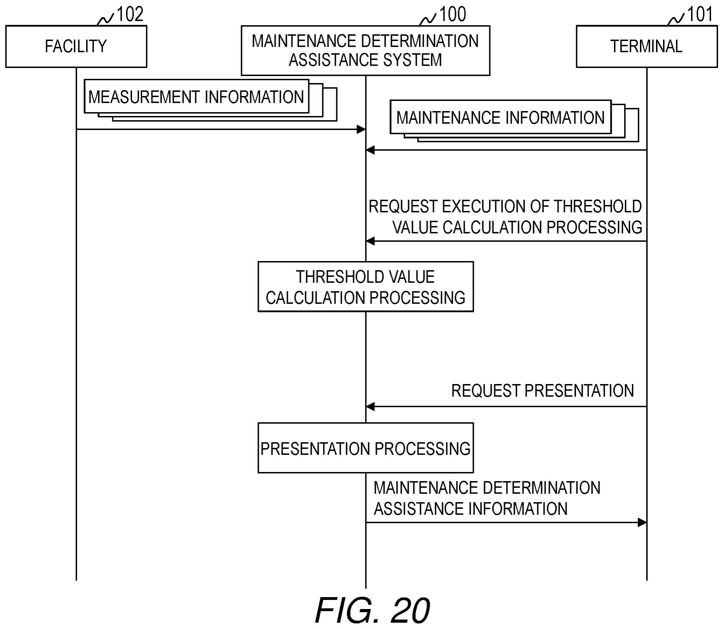

FIG. 20 is a sequence diagram for illustrating a usage method for the maintenance determination assistance system 100 according to the first embodiment.

The sensor device 104 installed in the facility 102 transmits the measurement information to the maintenance determination assistance system 100. The maintenance determination assistance system 100 stores the received measurement information in the equipment state DB 122.

The terminal 101 transmits the information relating to the maintenance work to the maintenance determination assistance system 100. The maintenance determination assistance system 100 stores the received information in the equipment state DB 122.

The administrator of the maintenance determination assistance system 100 or the user who operates the terminal 101 requests the execution of the threshold value calculation processing at a timing such as a change in a maintenance plan. The maintenance determination assistance system 100 executes the threshold value calculation processing, to thereby update the equipment parameter DB 120, the simulation result DB 123, and the analysis result DB 124.

The terminal 101 transmits the presentation request to the maintenance determination assistance system 100. In a case where the maintenance determination assistance system 100 receives the presentation request, the maintenance determination assistance system 100 executes the presentation processing for the determination assistance information, and transmits the determination assistance information to the terminal 101.

The maintenance worker refers to the maintenance determination assistance information, to thereby be capable of grasping the information surely requiring the maintenance. Moreover, the maintenance worker refers to the maintenance determination assistance information, to thereby be capable of selecting the equipment the maintenance of which is to be executed from the pieces of candidate equipment based on the quantitative information. As a result, the maintenance of the equipment can be executed within the range of the budget amount while suppressing the increase in risk of the operation. In other words, the maintenance reflecting an actual situation of the site can be achieved. As a result, revenue and expenditure of a business operator can be improved.

This invention is not limited to the above-mentioned embodiment, and includes various modification examples. Further, for example, in the above-mentioned embodiment, the configurations are described in detail in order to clearly describe this invention, but this invention is not necessarily limited to an embodiment that includes all the configurations that have been described. Further, another configuration can be added to, deleted from, and replace a part of the configuration of the embodiment.

Moreover, in regard to each of the above-mentioned configurations, functions, processing modules, processing means, and the like, a part thereof or an entirety thereof may be implemented by hardware, for example, by being designed as an integrated circuit. Moreover, this invention can be achieved by program code of software which implements the functions of the embodiment. In this case, a storage medium in which the program code is recorded is provided to a computer, and a processor included in the computer reads out the program code stored in the storage medium. In this case, the program code itself read out from the storage medium implements the above-mentioned functions of the embodiment, and the program code itself and the storage medium storing the program code constitute this invention. As such a storage medium for supplying the program code, for example, a flexible disk, a CD-ROM, a DVD-ROM, a hard disk drive, a solid state drive (SSD), an optical disc, a magneto-optical disk, a CD-R, a magnetic tape, a non-volatile memory card, or a ROM is used.

Moreover, the program code for implementing the functions described in this embodiment can be implemented in a wide range of programs or script languages, for example, an assembler, C/C++, Perl, Shell, PHP, Python, and Java.

Further, the program code of the software for implementing the functions of the embodiment may be distributed through a network, to thereby store the program code in storage means such as a hard disk or a memory of a computer or a storage medium such as a CD-RW or a CD-R, and the processor included in the computer may read out and execute the program code stored in the storage means or the storage medium.

In the above-mentioned embodiment, control lines and information lines that are assumed to be required for the sake of description are illustrated, but not all the control lines and the information lines on a product are illustrated. All the components may be coupled to one another.

**Claims**

1. A computer system, comprising at least one computer,

   the at least one computer system being coupled to a facility formed of at least one piece of equipment,
   the computer system holding threshold value information for managing threshold values for classifying, based on a failure probability of the at least one piece of equipment, into any one of a first state indicating a state in which maintenance is required, a second state indicating a state in which whether the maintenance is to be executed is required to be determined, or a third state indicating a state in which the maintenance is not required,
   the threshold value information including, for each piece of equipment, a maintenance threshold value that specifies a boundary between the first state and the second state and an abnormality threshold value that specifies a boundary between the second state and the third state, and
   the computer system being configured to execute:

      first processing of determining the maintenance threshold value for each piece of equipment; and
      second processing of calculating the failure probability of the at least one piece of equipment, classifying the at least one piece of equipment into any one of the first state, the second state, or the third state based on the failure probability of and the threshold value information on the at least one piece of equipment, and outputting determination assistance information including a result of the classification.

2. The computer system according to claim 1, wherein the computer system is, in the first processing, configured to:

      execute maintenance simulation of executing processing of determining, based on the failure probability of and the threshold value information on the at least one piece of equipment, the at least one piece of equipment the maintenance of which is to be executed for each time step in a simulation period, calculating a cost for the maintenance in the simulation period, and recording the cost and the maintenance threshold value for each piece of equipment;
      determine, based on the cost, whether the maintenance simulation is required to be executed again;
      update, in a case where the maintenance simulation is required to be executed again, the maintenance threshold value for each piece of equipment, and then execute the maintenance simulation; and
      execute, in a case where the maintenance simulation is not required to be executed again, analysis processing of determining the maintenance threshold value for each piece of equipment based on a history of the maintenance threshold value for each piece of equipment used in the maintenance simulation.

3. The computer system according to claim 2, wherein the computer system is configured to execute, in the maintenance simulation, a Monte Carlo tree search through use of a maintenance determination model for calculating a determination probability of the execution of the maintenance based on the failure probability of the at least one piece of equipment classified into the second state, to thereby determine whether the maintenance of the at least one piece of equipment classified into the second state is to be executed.

4. The computer system according to claim 3,

wherein the facility is managed in a unit of an equipment group formed of one or more pieces of equipment, wherein the computer system is, in the analysis processing, configured to:

calculate, for each equipment group, a group maintenance threshold value based on the determined maintenance threshold values for the pieces of equipment belonging to the equipment group; calculate, for each equipment group, a group abnormality threshold value based on the abnormality threshold values for the one or more pieces of equipment belonging to the equipment group; and record the equipment group, the group maintenance threshold value, and the group abnormality threshold value in correspondence to one another, and wherein the computer system is, in the second processing, configured to:

use, for each equipment group, the failure probability of each of the one or more pieces of equipment, the group maintenance threshold value, and the group abnormality threshold value to classify each of the one or more pieces of equipment belonging to the equipment group into any one of the first state, the second state, or the third state; and output the determination assistance information including a result of the classification.

5. The computer system according to claim 4, wherein the computer system is, in the second processing, configured to:

calculate, for each equipment group, a first index indicating a degree of requirement of the maintenance of the one or more pieces of equipment belonging to the equipment group and a second index indicating effect of the maintenance; and output the determination assistance information including the first index and the second index.

6. A maintenance determination assistance method to be executed by a computer system,

wherein the computer system includes at least one computer, wherein the computer system is coupled to a facility formed of at least one piece of equipment, wherein the computer system holds threshold value information for managing threshold values for classifying, based on a failure probability of the at least one piece of equipment, into any one of a first state indicating a state in which maintenance is required, a second state indicating a state in which whether the maintenance is to be executed is required to be determined, or a third state indicating a state in which the maintenance is not required, and wherein the threshold value information includes, for each piece of equipment, a maintenance threshold value that specifies a boundary between the first state and the second state and an abnormality threshold value that specifies a boundary between the second state and the third state, the maintenance determination assistance method comprising:

a first step of determining, by the at least one computer, the maintenance threshold value for each piece of equipment; and a second step of calculating, by the at least one computer, the failure probability of the at least one piece of equipment, classifying the at least one piece of equipment into any one of the first state, the second state, or the third state based on the failure probability of and the threshold value information on the at least one piece of equipment, and outputting determination assistance information including a result of the classification.

7. The maintenance determination assistance method according to claim 6, wherein the first step includes:

a third step of executing, by the at least one computer, maintenance simulation of executing processing of determining, based on the failure probability of and the threshold value information on the at least one piece of equipment, the at least one piece of equipment the maintenance of which is to be executed for each time step in a simulation period, calculating a cost for the maintenance in the simulation period, and recording the cost and the maintenance threshold value for each piece of equipment;

a fourth step of determining, by the at least one computer, based on the cost, whether the maintenance simulation is required to be executed again;

a fifth step of updating, by the at least one computer, in a case where the maintenance simulation is required to be executed again, the maintenance threshold value for each piece of equipment, and then executing the maintenance simulation; and

a sixth step of executing, by the at least one computer, in a case where the maintenance simulation is not required to be executed again, analysis processing of determining the maintenance threshold value for each piece of equipment based on a history of the maintenance threshold value for each piece of equipment used in the maintenance simulation.

8. The maintenance determination assistance method according to claim 7, wherein the third step and the fifth step include a step of executing, by the at least one computer, a Monte Carlo tree search through use of a maintenance determination model for calculating a determination probability of the execution of the maintenance based on the failure probability of the at least one piece of equipment classified into the second state, to thereby determine whether the maintenance of the at least one piece of equipment classified into the second state is to be executed.

9. The maintenance determination assistance method according to claim 8,

wherein the facility is managed in a unit of an equipment group formed of one or more pieces of equipment, wherein the sixth step includes the steps of:

calculating, by the at least one computer, for each equipment group, a group maintenance threshold value based on the determined maintenance threshold values for the one or more pieces of equipment belonging to the equipment group;

calculating, by the at least one computer, for each equipment group, a group abnormality threshold value based on the abnormality threshold values for the one or more pieces of equipment belonging to the equipment group; and

recording, by the at least one computer, the equipment group, the group maintenance threshold value, and the group abnormality threshold value in correspondence to one another, and

wherein the second step includes the steps of:

using, by the at least one computer, for each equipment group, the failure probability of each of the one or more pieces of equipment, the group maintenance threshold value, and the group abnormality threshold value to classify each of the one or more pieces of equipment belonging to the equipment group into any one of the first state, the second state, or the third state; and

outputting, by the at least one computer, the determination assistance information including a result of the classification.

10. The maintenance determination assistance method according to claim 9, wherein the second step includes the steps of:

calculating, by the at least one computer, for each equipment group, a first index indicating a degree of requirement of the maintenance of the one or more pieces of equipment belonging to the equipment group and a second index indicating effect of the maintenance; and

outputting, by the at least one computer, the determination assistance information including the first index and the second index.

11. A system, comprising:

a plurality of terminals to be used by users;
at least one facility formed of at least one piece of equipment; and
a maintenance determination assistance system,
wherein the maintenance determination assistance system holds threshold value information for classifying, based on a failure probability of the at least one piece of equipment, into any one of a first state indicating a state in which maintenance is required, a second state indicating a state in which whether the maintenance is to be executed is required to be determined, or a third state indicating a state in which the maintenance is not required, wherein the threshold value information includes, for each piece of equipment, a maintenance threshold value that specifies a boundary between the first state and the second state and an abnormality threshold value that specifies a boundary between the second state and the third state, and

wherein the maintenance determination assistance system is configured to:

obtain, from the at least one facility, measurement information indicating the state of the at least one piece of equipment;

execute maintenance simulation of executing processing of determining, based on the failure probability of and the threshold value information on the at least one piece of equipment, the at least one piece of equipment the maintenance of which is to be executed for each time step in a simulation period, calculating a cost for the maintenance in the simulation period, and recording the cost and the maintenance threshold value for each piece of equipment, determine, based on the cost, whether the maintenance simulation is required to be executed again, update, in a case where the maintenance simulation is required to be executed again, the maintenance threshold value for each piece of equipment, and then execute the maintenance simulation, and execute, in a case where the maintenance simulation is not required to be executed again, analysis processing of determining the maintenance threshold value for each piece of equipment based on a history of the maintenance threshold value for each piece of equipment used in the maintenance simulation; and

calculate the failure probability of the at least one piece of equipment, classify the at least one piece of equipment into any one of the first state, the second state, or the third state based on the failure probability of and the threshold value information on the at least one piece of equipment, and transmit, to the plurality of terminals, determination assistance information including a result of the classification.

FIG. 1

_～200_

COMPUTER

_～201_      _～202_      _～203_

| PROCESSOR | MAIN STORAGE DEVICE | AUXILIARY STORAGE DEVICE |
|---|---|---|

_～204_      _～205_      _～206_

| COMMUNICATION DEVICE | INPUT DEVICE | OUTPUT DEVICE |
|---|---|---|

*FIG. 2*

EP 4 668 184 A1

| EQUIPMENT ID | GROUP ID | FAILURE COST | MAINTENANCE COST | FACILITY MODEL PARAMETER | | MAINTENANCE DETERMINATION MODEL PARAMETER | | ABNORMALITY THRESHOLD VALUE |
|---|---|---|---|---|---|---|---|---|
| 301 | 302 | 303 | 304 | 305 | | 306 | | 307 |
| | | | | m | $\eta$ [day] | a | b | |
| EQ0001 | INS001EQG0001 | 10000 | 300 | 3.20 | 70 | 0.45 | 0.55 | 0.85 |
| EQ0003 | INS001EQG0001 | 10000 | 365 | 1.50 | 165 | 0.55 | 0.55 | 0.85 |
| EQ0008 | INS001EQG0001 | 10000 | 130 | 5.00 | 90 | 1.55 | 0.50 | 0.90 |
| EQ0013 | INS001EQG0001 | 10000 | 450 | 6.00 | 356 | 10.56 | 0.59 | 0.99 |
| EQ0002 | INS001EQG0002 | 300 | 100 | 1.00 | 72 | 9.55 | 0.59 | 0.99 |
| EQ0006 | INS001EQG0002 | 300 | 20 | 1.50 | 50 | 3.00 | 0.58 | 0.98 |
| EQ0007 | INS001EQG0002 | 300 | 90 | 5.00 | 279 | 4.50 | 0.65 | 0.95 |
| EQ0011 | INS001EQG0002 | 300 | 120 | 0.90 | 60 | 0.98 | 0.43 | 0.93 |
| EQ0012 | INS001EQG0002 | 300 | 30 | 5.30 | 105 | 0.55 | 0.50 | 0.89 |
| EQ0014 | INS001EQG0003 | 5000 | 130 | 3.89 | 120 | 0.77 | 0.59 | 0.90 |
| EQ0015 | INS001EQG0003 | 5000 | 100 | 4.20 | 158 | 1090.00 | 0.69 | 0.99 |
| EQ0016 | INS001EQG0003 | 5000 | 80 | 3.66 | 921 | 32.02 | 0.69 | 0.99 |
| EQ0017 | INS001EQG0003 | 5000 | 90 | 3.98 | 258 | 95.50 | 0.58 | 0.98 |
| EQ0004 | INS001EQG0004 | 80 | 5 | 1.00 | 81 | 0.85 | 0.35 | 0.95 |
| EQ0005 | INS001EQG0004 | 80 | 8 | 0.98 | 85 | 0.76 | 0.53 | 0.93 |
| EQ0009 | INS001EQG0004 | 80 | 15 | 3.68 | 681 | 0.75 | 0.69 | 0.89 |
| EQ0010 | INS001EQG0004 | 80 | 40 | 4.00 | 93 | 0.99 | 0.55 | 0.95 |

*FIG. 3*

300

| DATE AND TIME OF START (401) | DATE AND TIME OF END (402) | ACTION (403) | LOAD (404) |
|---|---|---|---|
| 2021/08/13 09:00 | 2021/08/13 13:00 | INSPECTION | - |
| 2021/08/13 14:00 | 2021/08/13 22:00 | OPERATION | 15 |
| 2021/08/14 09:00 | 2021/08/14 19:00 | OPERATION | 28 |
| ⋮ | ⋮ | ⋮ | ⋮ |
| 2021/09/15 13:00 | 2021/08/15 22:00 | OPERATION | 10 |
| 2021/09/16 09:00 | 2021/08/16 22:00 | INSPECTION | - |
| 2021/09/16 14:00 | 2021/08/16 17:00 | OPERATION | 40 |
| ⋮ | ⋮ | ⋮ | ⋮ |
| 2021/12/10 13:00 | 2021/12/10 22:00 | OPERATION | 20 |
| 2021/12/16 09:00 | 2021/12/16 17:00 | INSPECTION | - |
| 2021/12/17 09:00 | 2021/12/17 17:00 | INSPECTION | - |
| 2021/12/18 13:00 | 2021/12/18 20:00 | OPERATION | 45 |
| ⋮ | ⋮ | ⋮ | ⋮ |

400

## FIG. 4

| EQUIPMENT ID (501) | ELAPSED TIME (DAYS) (502) | MEASUREMENT VALUE (503) |
|---|---|---|
| EQ0001 | 90 | 0.50 |
| EQ0002 | 750 | 0.50 |
| EQ0003 | 300 | 0.72 |
| EQ0004 | 908 | 0.10 |
| ⋮ | ⋮ | ⋮ |

500

## FIG. 5A

| EQUIPMENT ID | DATE AND TIME OF OPERATION START | DATE AND TIME OF MAINTENANCE | DATE AND TIME OF FAILURE | MEASUREMENT VALUE |
|---|---|---|---|---|
| EQ0001 | 2018/03/06 10:30:49 | - | 2022/06/16 10:15:09 | 0.90 |
| EQ0003 | 2017/04/09 10:54:18 | - | 2022/06/16 20:50:18 | 0.89 |
| EQ0008 | 2019/05/09 23:20:08 | - | 2022/05/14 14:19:20 | 0.72 |
| EQ0013 | 2018/06/05 09:15:52 | - | 2022/04/27 01:10:20 | 0.96 |
| EQ0002 | 2018/11/20 14:10:19 | - | 2022/04/09 19:20:21 | 0.59 |
| EQ0006 | 2018/10/11 20:22:01 | 2022/03/09 19:20:21 | - | 0.96 |
| EQ0007 | 2019/12/30 01:10:05 | - | 2022/02/21 14:57:05 | 0.90 |
| EQ0011 | 2019/109/29 06:50:20 | 2022/02/09 10:20:15 | - | 0.98 |
| ⋮ | ⋮ | ⋮ | ⋮ | ⋮ |

*FIG. 5B*

EP 4 668 184 A1

START

RECEIVE SIMULATION CONDITION ~ S101

FACILITY MODEL GENERATION PROCESSING ~ S102

MAINTENANCE DETERMINATION MODEL
GENERATION PROCESSING ~ S103

INITIALIZE SIMULATION RESULT DB ~ S104

MAINTENANCE SIMULATION ~ S105

CONVERGENCE CONDITION IS
SATISFIED? ~ S106

NO

UPDATE MAINTENANCE THRESHOLD VALUES ~ S107

YES

ANALYSIS PROCESSING ~ S108

END

*FIG. 6*

```
              ┌──────────┐
              │  START   │
              └──────────┘
                    │
    ┌──────────────────────────────────────┐
    │ SELECT ENTRY FROM EQUIPMENT PARAMETER │ ～ S201
    │                 DB                     │
    └──────────────────────────────────────┘
                    │
    ┌──────────────────────────────────────┐
    │    OBTAIN ENTRY RELATING TO FAILURE   │ ～ S202
    │        FROM EQUIPMENT STATE DB        │
    └──────────────────────────────────────┘
                    │
                    │                   ～ S203
         ◇─────────────────────────◇
   NO    │  NUMBER OF ENTRIES IS LARGER  │
◄────────│    THAN THRESHOLD VALUE?      │
         ◇─────────────────────────◇
                    │ YES
    ┌──────────────────────────────────────┐
    │  CALCULATE PARAMETERS OF FACILITY MODEL│ ～ S204
    └──────────────────────────────────────┘
                    │
    ┌──────────────────────────────────────┐
    │ UPDATE ENTRY OF EQUIPMENT PARAMETER DB │ ～ S205
    └──────────────────────────────────────┘
                    │
                    │              ～ S206
         ◇─────────────────────────◇
         │  PROCESSING FOR ALL ENTRIES   │   NO
         │ OF EQUIPMENT PARAMETER DB HAS  │─────►
         │       BEEN COMPLETED?          │
         ◇─────────────────────────◇
                    │ YES
              ┌──────────┐
              │   END    │
              └──────────┘
```

## FIG. 7

NUMBER OF
ENTRIES

～ 801

OPERATION PERIOD

## FIG. 8

START

SELECT ENTRY FROM EQUIPMENT PARAMETER DB ⟋ S301

OBTAIN ENTRY RELATING TO PREVENTIVE MAINTENANCE FROM EQUIPMENT STATE DB ⟋ S302

⟋ S303
NUMBER OF ENTRIES IS LARGER THAN THRESHOLD VALUE?

NO

YES ⟋ S304
CALCULATE PARAMETERS OF MAINTENANCE DETERMINATION MODEL

⟋ S305
CALCULATE PARAMETERS OF MAINTENANCE DETERMINATION MODEL IN ACCORDANCE WITH RULE

UPDATE ENTRY OF EQUIPMENT PARAMETER DB ⟋ S306

⟋ S307
PROCESSING FOR ALL ENTRIES OF EQUIPMENT PARAMETER DB HAS BEEN COMPLETED?

NO

YES

END

*FIG. 9*

FIG. 10

START

T=0
PREVENTIVE MAINTENANCE COST=0
REACTIVE MAINTENANCE COST=0 — S401

RECORD MAINTENANCE THRESHOLD VALUES — S402

CALCULATE FAILURE PROBABILITIES — S403

WORK ACTION="OPERATION"? — S404
NO → (1)
YES

EQUIPMENT HAVING FAILURE EXISTS? — S405
NO
YES

ADD REACTIVE MAINTENANCE COST — S406

(2)

T←T+1 — S410

T= $T_{END}$ ? — S411
NO
YES

RECORD PREVENTIVE MAINTENANCE
COST AND REACTIVE MAINTENANCE COST — S412

END

*FIG. 11A*

①

⟨S407⟩
ONE OR MORE PIECES OF
TARGET EQUIPMENT/CANDIDATE EQUIPMENT
EXIST?

NO

YES

DETERMINE WHETHER OR NOT MAINTENANCE
OF EACH PIECE OF CANDIDATE EQUIPMENT
IS TO BE EXECUTED ⟨S408⟩

ADD PREVENTIVE MAINTENANCE COST ⟨S409⟩

①

## FIG. 11B

1201   1202   1203   1204   1200

| SIMULATION ID | PREVENTIVE MAINTENANCE COST | REACTIVE MAINTENANCE COST | MAINTENANCE THRESHOLD VALUE | | |
|---|---|---|---|---|---|
| | | | EQ001 | EQ001 | ... |
| 1 | 600 | 502 | 0.25 | 0.32 | ... |
| 2 | 562 | 652 | 0.56 | 0.98 | ... |
| ⋮ | ⋮ | ⋮ | ⋮ | ⋮ | ⋮ |

## FIG. 12

FIG. 13

START

DETERMINE MAINTENANCE THRESHOLD
VALUE FOR EACH PIECE OF EQUIPMENT — S501

CALCULATE INFLUENCE DEGREE — S502

CALCULATE GROUP MAINTENANCE THRESHOLD
VALUE — S503

CALCULATE GROUP ABNORMALITY THRESHOLD
VALUE — S504

END

## FIG. 14

MAINTENANCE
THRESHOLD
VALUE

SIMULATION ID

## FIG. 15A

NUMBER OF ENTRIES

0    MAINTENANCE THRESHOLD VALUE    1

## FIG. 15B

INFLUENCE DEGREE

0    FAILURE PROBABILITY    1

## FIG. 16A

FIG. 16B

FIG. 16C

1701    1702   1700

| EQUIPMENT ID | MAINTENANCE THRESHOLD VALUE |
|---|---|
| EQ0001 | 9 |
| ⋮ | ⋮ |

## FIG. 17A

1711              1712              1713              1714    1710

| GROUP ID | INFLUENCE DEGREE | GROUP MAINTENANCE THRESHOLD VALUE | GROUP ABNORMALITY THRESHOLD VALUE |
|---|---|---|---|
| INS001EQG0001 | 9 | 0.05 | 0.75 |
| ⋮ | ⋮ | ⋮ | ⋮ |

## FIG. 17B

START

CALCULATE FAILURE PROBABILITY OF EQUIPMENT — S601

IDENTIFY INFLUENCE DEGREE OF EQUIPMENT GROUP TO WHICH EQUIPMENT BELONGS — S602

IDENTIFY STATE OF EQUIPMENT — S603

CALCULATE EMERGENCY DEGREE OF EQUIPMENT — S604

CALCULATE REPAIRMENT EFFICIENCY OF EQUIPMENT — S605

GENERATE AND OUTPUT DETERMINATION ASSISTANCE INFORMATION — S606

END

## FIG. 18

FIG. 19

FIG. 20

## INTERNATIONAL SEARCH REPORT

| International application No. |
| --- |
| **PCT/JP2023/026217** |

| | |
| --- | --- |
| **A.** | **CLASSIFICATION OF SUBJECT MATTER** |
| | *G06Q 10/20*(2023.01)i; *G06Q 10/06*(2023.01)i<br>FI:   G06Q10/20; G06Q10/06 |

According to International Patent Classification (IPC) or to both national classification and IPC

| | |
| --- | --- |
| **B.** | **FIELDS SEARCHED** |

Minimum documentation searched (classification system followed by classification symbols)

G06Q10/20; G06Q10/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | JP 2019-133412 A (HITACHI, LTD.) 08 August 2019 (2019-08-08)<br>    paragraphs [0081]-[0083], [0098]-[0122], fig. 9 | 1, 6 |
| A | | 2-5, 7-11 |
| Y | JP 2007-226415 A (CENTRAL RES. INST. OF ELECTRIC POWER IND.) 06 September 2007 (2007-09-06)<br>    paragraphs [0027], [0033], [0034], [0087]-[0092], [0096]-[0099] | 1, 6 |
| A | JP 2023-12668 A (MITSUBISHI HEAVY INDUSTRIES, LTD.) 26 January 2023 (2023-01-26)<br>    paragraphs [0074], [0089], [0116], [0119] | 1-11 |
| A | WO 2022/070529 A1 (HITACHI, LTD.) 07 April 2022 (2022-04-07)<br>    entire text, all drawings | 1-11 |

☑ Further documents are listed in the continuation of Box C.      ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **28 September 2023** | **10 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/026217** |

**C.     DOCUMENTS CONSIDERED TO BE RELEVANT**

| Category* | Citation of document, with indication, where appropriate, of the relevant passages | Relevant to claim No. |
| --- | --- | --- |
| A | 高平寛之, 故障診断システムにおける故障原因の平均情報量に着目した調査順序提示アルゴリズムの提案, FIT2022 第21回情報科学技術フォーラム 講演論文集, 30 August 2022, (TAKAHIRA, Hiroyuki, Proposal of an Algorithm for Suggesting Investigation Sequence in Failure Diagnosis Systems: Focusing on the Entropy of Failure Causes, The 21st Forum on Information Technology) <br>          pages 321-322 | 1-11 |
| A | 鈴木忠志, 予兆・予測診断ソリューション, Hitachi Social Innovation Forum 2020 Tokyo [online], 06 November 2020 (received date), [retrieved on 28 September 2023], Internet <URL: https://hsiftokyo.hitachi/_online/pdf/SE03-13_download_jp_01.pdf>, (SUZUKI, Tadashi), non-official translation (Predictive/predictive diagnostic solutions) <br>          entire text, all drawings | 1-11 |

Form PCT/ISA/210 (second sheet) (January 2015)

## INTERNATIONAL SEARCH REPORT
### Information on patent family members

International application No.

**PCT/JP2023/026217**

| Patent document cited in search report | | | Publication date (day/month/year) | Patent family member(s) | | | Publication date (day/month/year) |
|---|---|---|---|---|---|---|---|
| JP | 2019-133412 | A | 08 August 2019 | US | 2019/0236556 | A1 | |
| | | | | paragraphs [0109]-[0111], [0126]-[0145], fig. 9 | | | |
| JP | 2007-226415 | A | 06 September 2007 | (Family: none) | | | |
| JP | 2023-12668 | A | 26 January 2023 | WO | 2023/286659 | A1 | |
| WO | 2022/070529 | A1 | 07 April 2022 | EP | 4224380 | A1 | |
| | | | | entire text, all drawings | | | |
| | | | | AU | 2021355054 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023023601 A
- JP 2005182465 A
- JP 2020004403 A